# EUROPEAN PATENT SPECIFICATION

(11) **EP 2 669 522 B1**
(45) Date of publication and mention of the grant of the patent: **25.03.2020**
(21) Application number: 12739616.6
(22) Date of filing: 25.01.2012
(51) Int. Cl.: F04C 2/107, F04C 15/00, F16D 1/06, F16D 1/076

(54) **SINGLE-SHAFT ECCENTRIC SCREW PUMP**
EINWELLIGE EXZENTERSCHNECKENPUMPE
POMPE À VIS EXCENTRIQUE À UN SEUL ARBRE

(30) Priority: 25.01.2011 JP 2011012672
(43) Date of publication of application: 04.12.2013
(73) Proprietor: Heishin Ltd., Hyogo 652-0852 (JP)
(72) Inventor: KUWAYAMA, Akitaka, Nagahama-shi, Shiga 529-0261 (JP); SAEKI, Taisuke, Nagahama-shi, Shiga 529-0261 (JP)
(74) Representative: Plougmann Vingtoft a/s
(86) International application number: PCT/JP2012/051501
(87) International publication number: WO 2012/102288

(56) References cited:
- WO-A1-97/40273
- JP-A- 2 240 407
- JP-A- 8 284 917
- JP-A- 57 083 722
- JP-A- 61 142 379
- JP-A- 2003 239 923
- JP-A- 2009 174 582
- JP-A- 2009 236 306
- JP-B2- 3 030 265

## Description

### [Technical Field]

The present invention relates to a uniaxial eccentric screw pump having a feature in structure of a structural coupling part for coupling a flexible rod provided to a power transmission mechanism part to a rotor.

### [Background Art]

Conventionally, in a uniaxial eccentric screw pump disclosed in the following Patent Literature 1, rotational power outputted from an output shaft of a drive is configured transferable to a rotor via a flexible rod. A coupling part (structural coupling part) to a shaft body (in Patent Literature 1, a drive shaft) connected with the flexible rod is formed by a method called "shrink fit." Joining by the shrink fit is applied by inserting, into an end of one of the output shaft and a passive shaft, the other in a heated state, and expanding or contracting them. By joining in this way, both the shafts can be joined to be in a state where rattling is not caused therebetween.

In a flexible drive shaft (flexible rod) coupled to a rotor, the rotor, and a drive shaft device disclosed in the following Patent Literature 2, they are constructed such that a head part with a flange fixed to the flexible drive shaft (flexible rod) with adhesives is fastened to the rotor with bolts.

WO 97/40273 discloses a progressive cavity pump. The stator, rotor and/or flex shaft of the progressive cavity pump is made up of composite materials, e.g., fiberglass and resin, in a variety of combinations with and without bonded resilient elastomers. The composites are formulated to provide resiliency and non-resiliency where needed. The flex shaft between the rotary power source and the rotor is made of composite materials and designed to absorb the orbital and gyrational movement of the rotor.

### [Citation List]

### [Patent Literature]

[Patent Literature 1] JP3629100B
[Patent Literature 2] JP3030265B

### [Summary of the Invention]

### [Technical Problem]

However, when the flexible rod is joined to the shaft body (connecting shaft), such as the drive shaft or the rotor, by the shrink fit as described above, since the joined part (structural coupling part) must be heated when separating the both for maintenance or the like, there is an inconvenience where considerable time and effort are required, and exclusive equipment or the like are required as well.

Approaches for forming the structural coupling part by, other than the coupling method by the shrink fit described above, a method of coupling with adhesive by using serration on one of the shafts, a coupling method by inserting a shaft of which an end is formed in a tapered shape into a shaft hole formed in the other shaft, etc. However, by the former method, there is an inconvenience where the reliability of adhesive strength is insufficient. Further, by the latter method, there is an inconvenience where it is difficult to form the shaft end part into the tapered shape in constant quality and, in addition, it is difficult to suppress fretting wear of the tapered fastening part.

Further, in the structure disclosed in Patent Literature 2 described above, although the head part with the flange is configured to be fixed with a plurality of bolts at a plurality of locations in the circumferential direction, if adjustments of fastening torques of respective bolts are not correct, fastening forces may be eccentric (so-called "unevenly clamped state"). Further, skills are required in order to substantially equalize the fastening torques of the respective bolts. Therefore, when the structure according to Patent Literature 2 is adopted, there is an inconvenience where adjustments of the fastening torques of the respective bolts require time and effort, and the flexible rod cannot be attached and removed easily.

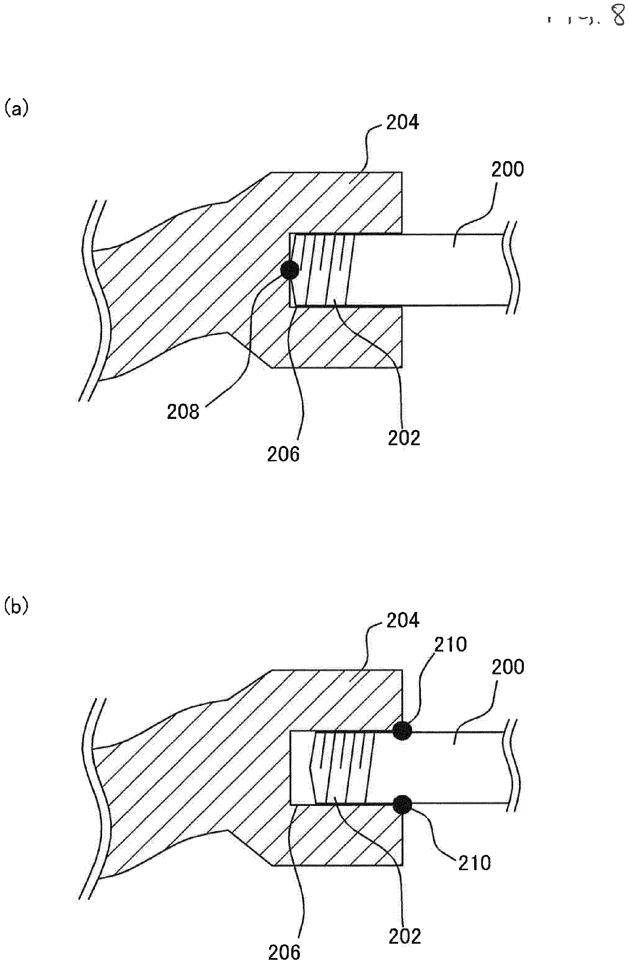

For these reasons, the present inventors have examined a configuration as shown in Fig. 8 in which a thread 202 is formed in an end part of a flexible rod 200, a threaded hole 206 which is threadedly engageable with the thread 202 described above is formed in an end part of a rotor 204, and both are coupled together by a threaded engagement. As a result, it is found that, when the thread 202 of the flexible rod 200 is threadedly engaged until it reaches a bottom part of the threaded hole 206 as shown in Fig. 8(a), since the threaded engagement is effective near a tip end part 208 of the flexible rod 200, most of the root portions of the male thread other than near the tip end of the thread 202 serve as an operating load (more specifically, a stress concentrated part for a moment, an axial force, or a torque) to cause cracks. It is found that, alternatively, when the threaded engagement is applied such that a clearance may be formed between the bottom part of the threaded hole 206 and the tip end part 208 of the flexible rod 200 as shown in Fig. 8(b), since stress is concentrated on near an opening part of the threaded hole 206, and a flexible rod 200 in root portions of the male thread of the thread 202 to cause cracks. Further, it is found that in the cases where coupling modes of the threaded engagement as shown in Figs. 8(a) and 8(b) are adopted, when the uniaxial eccentric screw pump is operated, fluid enters into the clearance formed between the threaded hole 206 and the flexible rod 200 and, thus, this may cause corrosion and the like.

Based on the above knowledge, the purpose of the present invention is to provide a uniaxial eccentric screw pump, which can easily couple a flexible rod to a rotor so that rattling is not caused, and can prevent inconveniences such as fretting wear, breakage of shafts associated with a stress concentration, and corrosion by entering of fluid.

### [Solution to Problem]

A uniaxial eccentric screw pump of the invention provided in order to resolve the above inconveniences is described in claim 1.

In the uniaxial eccentric screw pump of the present invention, the threaded shaft part threadedly engages with the threaded groove, and, further, the flexible rod facially contacts the coupling shaft (the driving side shaft body and/or the passive side shaft body). Thus, in the structural coupling part, the flexible rod is firmly coupled to the coupling shaft so that rattling is not caused therebetween, even though it has a simple structure. In addition, since the flexible rod is coupled to the coupling shaft in a state where the flexible rod facially contacts the coupling shaft in the structural coupling part, it is possible to receive a bending moment which repeatedly acts in accordance with the eccentric rotation at the facially contacting part using elastic effects produced by tension of the threads. Therefore, in the uniaxial eccentric screw pump of the present invention, even if it is affected by the moment which acts in accordance with the eccentric rotation, a reduction of the coupling force will not be caused in the structural coupling part. Further, in the uniaxial eccentric screw pump of the present invention, fretting wear of the coupling shaft and the flexible rod (the shafts A and B), and breakage associated with a stress concentration will not be caused.

In the uniaxial eccentric screw pump of the present invention, the flexible rod facially contacts the coupling shaft in the structural coupling part, and it can certainly prevent fluid from entering via the threaded shaft part and the threaded groove. Therefore, in the uniaxial eccentric screw pump of the present invention, inconveniences such as corrosion of the coupling shaft and the flexible rod (the shafts A and B) associated with entering of fluid will not be caused.

In the uniaxial eccentric screw pump of the present invention, since the structural coupling part is formed by threadedly engaging the threaded shaft part with the threaded groove, and facially contacting the flexible rod to the coupling shaft, it has equivalent simplicity and it excels in attaching and removal, and mass production, compared with the structures formed by shrink fit and the like described above. Thus, it has a very simple structure compared with other conventional structures, and it has a structure in which assembling and disassembling can easily be carried out. Therefore, according to the uniaxial eccentric screw pump of the present invention, it is possible to suppress manufacturing cost, time and effort of maintenance and the like to the minimum.

A uniaxial eccentric screw pump of the invention provided in order to resolve the above inconveniences includes a drive operable to generate rotational power, a power transmission mechanism part operable to transmit the rotational power inputted from the drive, a rotor comprised of a male threaded shaft body operable to eccentrically rotate by being driven with the rotational power transmitted via the power transmission mechanism part, and a stator into which the rotor is insertable, and an inner circumferential surface thereof being formed in a female thread. A flexible rod having flexibility is provided to the power transmission mechanism part, and the flexible rod connects between a driving side shaft body operable to be rotated with the rotational power generated in the drive and a passive side shaft body constituting the rotor. The driving side shaft body and/or the passive side shaft body are used as a coupling shaft, and a structural coupling part formed by connecting the flexible rod with the coupling shaft is formed at one end or both ends of the flexible rod. When one of the flexible rod and the coupling shaft is defined to be a shaft A and the other is defined to be a shaft B, a flange part projecting radially outward and a threaded shaft part formed on a tip end side of the shaft A with respect to the flange part are provided to the shaft A, a shaft insertion hole is formed so as to open in an end face of the shaft B, the threaded shaft part of the shaft A being insertable into the shaft insertion hole, and a threaded groove with which the threaded shaft part is threadedly engageable being formed in an inner circumferential surface of the shaft insertion hole, and in the structural coupling part, the threaded shaft part formed in the shaft A is inserted into the shaft insertion hole formed in the shaft B, the threaded shaft part threadedly engages with the threaded groove, and the flange part of the shaft A facially contacts the end face of the shaft B to couple the shaft A to the shaft B.

In the uniaxial eccentric screw pump of the present invention, it is possible to easily couple the coupling shaft (the driving side shaft body and/or the passive side shaft body) and the flexible rod by threadedly engaging the threaded shaft part with the threaded groove so that rattling is not caused therebetween. In addition, since the shaft A is coupled to the shaft B in a state where the flange part of the shaft A facially contacts the end face of the shaft B in the structural coupling part, it is possible to receive a bending moment which repeatedly acts in accordance with the eccentric rotation at the facially contacting part using elastic effects produced by tension of the threads. Therefore, in the uniaxial eccentric screw pump of the present invention, although the structural coupling part has a very simple structure, the coupling shaft and the flexible rod (the shafts A and B) can be firmly coupled to each other so that rattling is not caused therebetween. Further, in the uniaxial eccentric screw pump of the present invention, fretting wear and breakage associated with a stress concentration of the coupling shaft and the flexible rod (the shafts A and B) will not be caused.

In the uniaxial eccentric screw pump of the present invention, the flange part of the shaft A facially contacts the end face of the shaft B in the structural coupling part, and it can certainly prevent fluid from entering through the threaded shaft part and the threaded groove. Therefore, in the uniaxial eccentric screw pump of the present invention, inconveniences such as corrosion of the coupling shaft and the flexible rod (the shafts A and B) associated with entering of fluid will not be caused.

In the uniaxial eccentric screw pump of the present invention, since the structural coupling part is formed by threadedly engaging the threaded shaft part with the threaded groove, and facially contacting the flexible rod to the coupling shaft, it has simplicity equivalent to the structures formed by shrink fit and the like described above and it excels in attaching and removal, and mass production. Thus, it has a very simple structure compared with other conventional structures. Accordingly, the uniaxial eccentric screw pump of the present invention can suppress manufacturing cost to the minimum. In addition, since the uniaxial eccentric screw pump of the present invention has the structure in which it can be assembled by threadedly engaging the threaded shaft part with threaded groove, and it can be disassembled by releasing the threaded engagement of the both, it can also suppress time and effort of maintenance to the minimum.

In the uniaxial eccentric screw pump of the invention described above, a clearance is preferably formed between the tip end part of the shaft A and a bottom part of the shaft insertion hole formed in the shaft B.

According to this configuration, it is possible to certainly cause the moment, which acts in the axial direction and the shaft rotating direction in accordance with the eccentric rotation, to act on the part where the flange part of the shaft A facially contacts the end face of the shaft B. Thus, it can certainly prevent the breakage of the coupling shaft and the flexible rod (the shafts A and B) resulting from the moment associated with the eccentric rotation.

In the uniaxial eccentric screw pump of the invention described above, the shaft A may be dividable into the threaded shaft part and a flange part.

When it has this configuration, the shaft A is formed by mounting the threaded shaft part to the flange part, and the shafts A and B can be coupled to each other by threadedly engaging the threaded shaft part with the shaft B.

In the uniaxial eccentric screw pump of the invention described above, a non-threaded shaft part preferably exists in the shaft A, between a flange part and the threaded shaft part, and, in the structural coupling part, the non-threaded shaft part is preferably inserted into the shaft insertion hole.

When it has this configuration, it is possible to receive the moment associated with the eccentric rotation at two locations of the facially contacting part between the flange part of the shaft A and the end face of the shaft B, and the contacting part between the boundary part of the threaded shaft part and the non-threaded shaft part, and the inner circumferential surface of the shaft insertion hole. Thus, it can certainly prevent the breakage of the coupling shaft and the flexible rod (the shafts A and B) resulting from the moment associated with the eccentric rotation. In addition, by providing the non-threaded shaft part described above, it can prevent that the non-threaded shaft part stretches in the axial direction during the eccentric rotation and the threads which couple and fix the shafts A and B are loosen.

In the uniaxial eccentric screw pump of the invention described above, the flange part of the shaft A preferably has a contact surface operable to facially contact an end face of the shaft B, and the contact surface of the shaft A and/or the end face of the shaft B are preferably formed smoothly.

According to this configuration, when the shafts A and B are coupled to each other, since the contact surface of the shaft A and the end face of the shaft B become in a state where they facially contact and substantially close contact to each other without a substantial clearance, a surface pressure which acts on the contact surface and the end face by the threaded engagement between the threaded shaft part and the threaded groove is increased. Thus, it can certainly prevent the corrosion and the like associated with entering of fluid from occurring in the structural coupling part.

In the uniaxial eccentric screw pump of the invention described above, a groove is preferably formed in the contact surface of the flange part of the shaft A and/or the end face of the shaft B, and a sealing member is preferably fitted into the groove.

According to this configuration, in addition to the sealing effects of the facial contact between the flange part of the shaft A and the end face of the shaft B, the entering of fluid into the structural coupling part can be prevented by sealing effects of the sealing member. Therefore, in the uniaxial eccentric screw pump of the present invention, it can certainly prevent inconveniences such as corrosion of the coupling shaft and the flexible rod (the shafts A and B) associated with entering of fluid.

In the uniaxial eccentric screw pump of the invention described above, the coupling shaft preferably rotates mainly in a predetermined rotational direction, and a thread is preferably formed in the threaded shaft part in the opposite direction from the rotational direction of the coupling shaft.

In the uniaxial eccentric screw pump of the present invention, since the threads of the threaded shaft part and the threaded groove part are formed in the opposite direction from the rotational direction of the coupling shaft, it can certainly prevent the coupling force in the structural coupling part from reducing associated with the rotation of the coupling shaft and the flexible rod.

### [Advantageous Effects of the Invention]

According to the present invention, the uniaxial eccentric screw pump, which can easily couple the rotor to the flexible rod so that rattling is not caused therebetween, and can prevent inconveniences such as fretting wear, breakage of the shafts associated with a stress concentration, and corrosion by entering of fluid, can be provided.

### [Brief Description of Drawings]

Fig. 1 is a cross-sectional view showing a structure of a uniaxial eccentric screw pump according to one embodiment of the present invention.
Fig. 2(a) is an exploded perspective view of a structural coupling part, and Fig. 2(b) is a perspective view of the structural coupling part.
Fig. 3 is a cross-sectional view sequentially showing a method of coupling a rotor to a flexible rod.
Fig. 4(a) is an exploded perspective view of a structural coupling part according to a modification, and Fig. 4(b) is a cross-sectional view of the structural coupling part shown in Fig. 4(a).
Fig. 5 is a cross-sectional view of a structural coupling part according to a modification.
Fig. 6 is a perspective view of a flexible rod according to a modification.
Fig. 7(a) is a cross-sectional view showing an exploded state of a structural coupling part according to a modification, and Fig. 7(b) is a cross-sectional view showing an assembled state of the structural coupling part, shown in Fig. 7(a).
Fig. 8 is a cross-sectional view showing one example of the coupling structure of the rotor and the flexible rod which was examined by the present inventors.

### [Description of Embodiments]

A uniaxial eccentric screw pump 10 according to one embodiment of the present invention is now described in detail with reference to the drawings. Note that the uniaxial eccentric screw pump 10 has a feature in the structure of a coupling part (structural coupling part 100) of a flexible rod 62 and a rotor 30 (passive side shaft body) which is a connected shaft connected with the flexible rod 62 as described later in detail. However, in the following description, the entire structure is described prior to the description of these.

### ENTIRE STRUCTURE OF UNIAXIAL ECCENTRIC SCREW PUMP 10

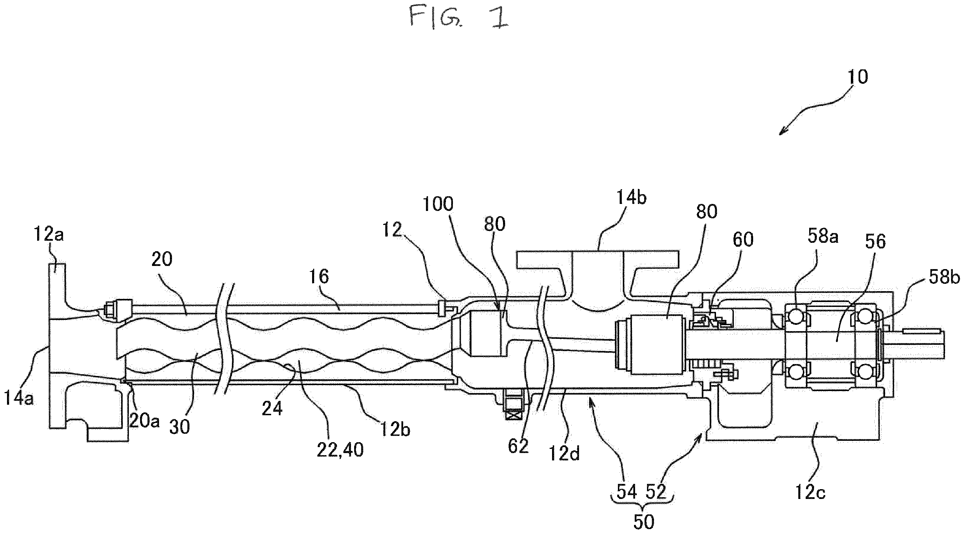

The uniaxial eccentric screw pump 10 is a so-called rotary displacement pump, and, as shown in Fig. 1, it is configured so that a stator 20, the rotor 30, a power transmission mechanism 50, and the like are accommodated inside a casing 12. The casing 12 is a cylindrical member made of metal, and a first opening 14a is formed in a disk-shaped end stud 12a attached to one end side in a longitudinal direction of the casing 12. In addition, a second opening 14b is formed in an outer circumferential part of the casing 12. The second opening 14b communicates with an internal space of the casing 12 in an intermediate portion 12d of the casing 12, which is located at an intermediate portion in the longitudinal direction.

The first and second openings 14a and 14b are parts which respectively function as a suction port and a discharge port of the uniaxial eccentric screw pump 10. Describing in more detail, the uniaxial eccentric screw pump 10 of this embodiment can pump fluid by rotating the rotor 30 in a positive direction so that the first opening 14a functions as the discharge port and the second opening 14b functions as the suction port. Contrary to this, the uniaxial eccentric screw pump 10 can pump the fluid by rotating the rotor 30 in the opposite direction so that the first opening 14a functions as the suction port and the second opening 14b functions as the discharge port. The uniaxial eccentric screw pump 10 of this embodiment operates so that the first opening 14a functions as the discharge port and the second opening 14b functions as the suction port. In the uniaxial eccentric screw pump 10 of this embodiment, since the rotor 30 rotates in the positive direction except for special occasions, the first opening 14a functions as the discharge port and the second opening 14b as the suction port.

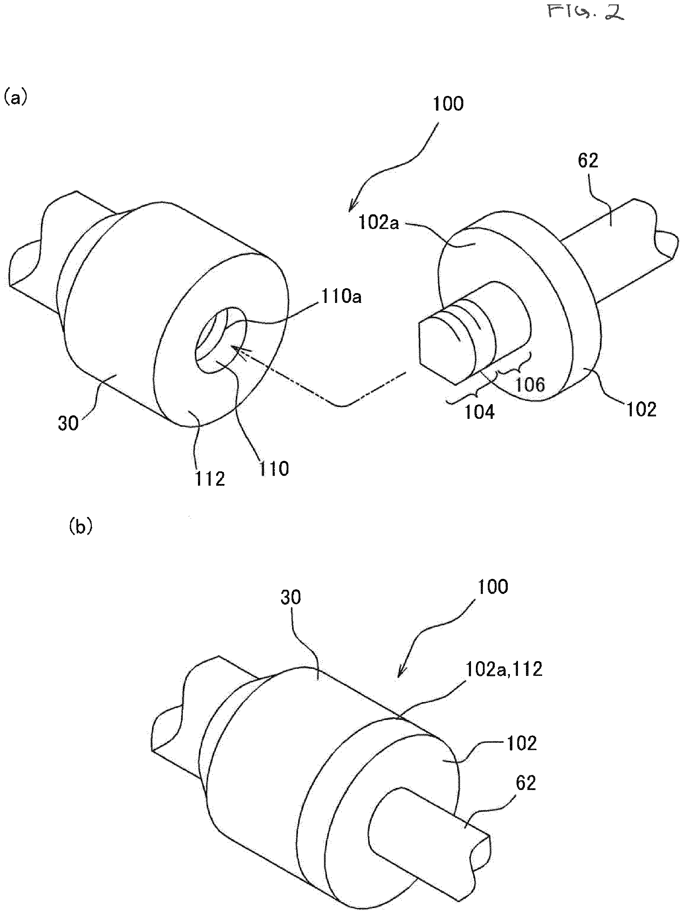

The stator 20 is created from an elastic body, a resin or the like, which is represented by rubber. The stator 20 may have a cylindrical shape with a polygonal cross section, in addition to a circular cylindrical shape. In this embodiment, the stator 20 has a contour shape of a substantially circular cylindrical shape. The material of the stator 20 is suitably selected in accordance with a type, characteristics and the like of the fluid which is a matter to be transferred using the uniaxial eccentric screw pump 10. The stator 20 exists inside a stator mounting part 12b at a location adjacent to the first opening 14a in the casing 12. An outer diameter of the stator 20 is substantially the same as an inner diameter of the stator mounting part 12b. For this reason, the stator 20 is attached in a state where its outer circumferential surface substantially closely contacts the inner circumferential surface of the stator mounting part 12b. Further, the stator 20 is fixed by pinching the flange part 20a located on one end side by the end stud 12a in an end of the casing 12, and attaching and fastening stay bolts 16 over the end stud 12a and a body part of the casing 12. Therefore, the stator 20 does not cause a positional shift and the like inside the stator mounting part 12b of the casing 12. The inner circumferential surface 24 of the stator 20 is formed in a single-twist or multi-twist female thread shape with n-grooves. In this embodiment, it is configured in multi-twist shape with two grooves as shown in Figs. 1 and 2.

The rotor 30 is a metal shaft body and is formed in a single-twist or multi-twist female thread shape with n-1 grooves. In this embodiment, the rotor 30 is formed in a multi-twist shape with one groove. The rotor 30 is a shaft body (coupling shaft) to which a flexible rod 62 described later in detail is connected. In addition, the rotor 30 is also a shaft body (passive side shaft body) which carries out an eccentric rotation by power transmitted via the flexible rod 62. In more detail, the rotor 30 revolves along the inner circumferential surface 24 of the stator 20 while rotating inside the stator 20. The rotor 30 is formed so that its cross-sectional shape becomes a substantially true circle even if it is seen in cross section at any location in the longitudinal direction. The rotor 30 is inserted into a penetrating bore 22 formed in the stator 20 described above, and is eccentrically rotatable inside the penetrating bore 22.

When the rotor 30 is inserted into the stator 20, the outer circumferential surface 32 of the rotor 30 and the inner circumferential surface 24 of the stator 20 contact with each other over both tangent lines. In this state, a fluid transferring path 40 is formed between the inner circumferential surface 24 of the stator 20 which forms the penetrating bore 22, and the outer circumferential surface of the rotor 30. The fluid transferring path 40 is a multi-twist (d-twist) flow path having a length which is d times longer than a reference lead length S of the stator 20 and the rotor 30 in the axial direction, where a lead length L of the stator 20 and the rotor 30 described above is considered to be the reference length S.

The fluid transferring path 40 spirally extends in the longitudinal direction of the stator 20 and the rotor 30. When the rotor 30 is rotated inside the penetrating bore 22 of the stator 20, the fluid transferring path 40 advances in the longitudinal direction of the stator 20 while rotating inside the stator 20. Therefore, as the rotor 30 is rotated, the fluid can be sucked into the fluid transferring path 40 from one end side of the stator 20, the fluid can be transferred toward the other end side of the stator 20 in a state where the fluid is enclosed inside the fluid transferring path 40, and the fluid can be discharged at the other end side of the stator 20. That is, when the rotor 30 is rotated in the positive direction, it is possible to pump the fluid sucked from the second opening 14b, and to discharge it from the first opening 14a. Alternatively, when the rotor 30 is rotated in the opposite direction, it is possible to discharge the fluid sucked from the first opening 14a, from the second opening 14b.

The power transmission mechanism 50 is provided to transmit power from a power source (not shown) such as a motor provided outside the casing 12 to the rotor 30 described above. The power transmission mechanism 50 includes a power connecting part 52 and an eccentric rotation part 54. The power connecting part 52 is provided on one end side of the casing 12 in the longitudinal direction, more specifically, inside the shaft accommodating part 12c which is provided on the opposite side (hereinafter, it may simply be referred to as "the base end side") from the side where the end stud 12a and the stator mounting part 12b are provided. Further, the eccentric rotation part 54 is provided to the intermediate portion 12d formed between the shaft accommodating part 12c and the stator mounting part 12b.

The power connecting part 52 has a drive shaft 56, and this is rotatably supported by two bearings 58a and 58b. The drive shaft 56 is externally extracted from an occluded part on the base end side of the casing 12, and is connected with the power source. Therefore, it is possible to rotate the drive shaft 56 by operating the power source. Between the shaft accommodating part 12c where the power connecting part 52 is provided and the intermediate portion 12d, a shaft seal device 60 comprised of, for example, a mechanical seal or a gland packing is provided and, thus, it is structured so that the fluid the shaft to be transferred is prevented from leaking from the intermediate portion 12d to the shaft accommodating part 12c side.

The eccentric rotation part 54 is a part which couples the drive shaft 56 to the rotor 30, which are described above, so that a power transfer is possible. The eccentric rotation part 54 includes a flexible rod 62 and a universal joint 80. The flexible rod 62 is coupled to the drive shaft 56 via the universal joint 80. The flexible rod 62 is coupled to the rotor 30 via the structural coupling part 100 described later in detail. By these configurations, the eccentric rotation part 54 can transmit the rotational power transmitted via the drive shaft 56 to the rotor 30, and eccentrically rotate the rotor 30.

### STRUCTURE OF COUPLING STRUCTURAL PART 100

Next, the structure of the structural coupling part 100 is described in detail with reference to the drawings. The structural coupling part 100 is a part which couples the flexible rod 62 (shaft A) to the rotor 30 (shaft B). As shown in Fig. 2, the flexible rod 62 has a flange part 102, a threaded shaft part 104, and a non-threaded shaft part 106 at an end part on the structural coupling part 100 side (hereinafter, also referred to as "the tip end side"). The flange part 102 is a flange-like part which projects radially outward from the flexible rod 62.

The flange part 102, in a state where the structural coupling part 100 is formed, is surface finished so that its surface which facially contacts an end face 112 of the rotor 30 (hereinafter, also referred to as "the seating surface 102a") is substantially smooth. Although the surface finish of the seating surface 102a can be carried out by various methods, it may be carried out by, for example, turning by a lathe, grinding by a whetstone, polishing by lapping, etc. When the seating surface 102a is surface finished by lathe cutting, the surface can be formed to have a surface roughness of about Ra= 1.6. Alternatively, when grinding by a whetstone or the like is applied, the seating surface 102a can be formed to have a surface roughness of about Ra= 0.1 to 0.8. Alternatively, by carrying out the polishing by lapping, the seating surface 102a can be formed to have a surface roughness of Ra= 0.1 or less.

The threaded shaft part 104 is a part which is located further on the tip end side from the flange part 102, and is a part where a male thread 104a is formed in the opposite direction on the basis of the positive rotation direction of the rotor 30. The non-threaded shaft part 106 is a part located between the threaded shaft part 104 and the flange part 102. Thread is not formed in the non-threaded shaft part 106, but the surface is made smooth. The threaded shaft part 104 and the non-threaded shaft part 106 are formed substantially at the center of the flange part 102.

A shaft insertion hole 110 is formed on the base end side of the rotor 30, in addition to the fundamental configuration described above. The shaft insertion hole 110 opens in an end face 112 on the base end side of the rotor 30, and it is a hole into which the threaded shaft part 104 of the flexible rod 62 can be inserted in the longitudinal direction of the rotor 30. Inside of the shaft insertion hole 110, a threaded groove 110a which can threadedly engage with the thread of the threaded shaft part 104 is formed.

Surface finishing is applied to the end face 112 of the rotor 30 so that it is substantially smooth similar to the seating surface 102a (contact surface) of the flexible rod 62 described above. Although the surface finish of the end face 112 can be carried out by various methods, it is possible to carry out by, for example, turning by a lathe, grinding by a whetstone, polishing by lapping, or the like, similar to the seating surface 102a described above.

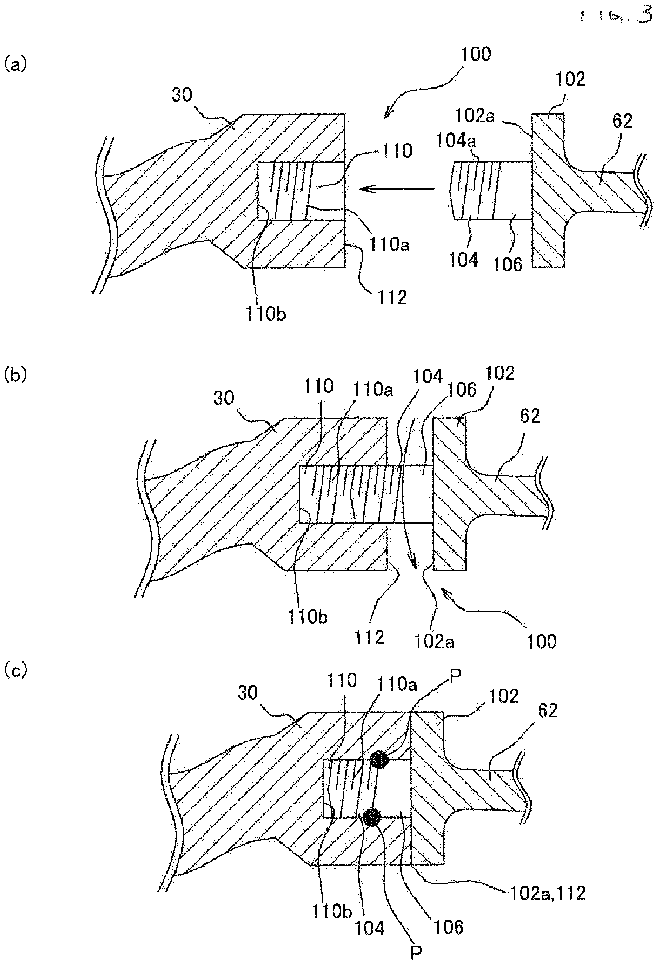

The structural coupling part 100 is formed by inserting the threaded shaft part 104 of the flexible rod 62 described above into the shaft insertion hole 110 of the rotor 30 as shown in Fig. 3(a), and then threadedly engaging one another as shown in Fig. 3(b). By forming the structural coupling part 100 in this way, when the flexible rod 62 is connected with the rotor 30, the flange part 102 provided to the flexible rod 62 side as shown in Figs. 2(b) and 3(c) becomes in a state where it facially contacts the end face 112 of the rotor 30. A clearance is formed between the tip end part of the flexible rod 62 and a bottom part 110b of the shaft insertion hole 110. Further, it becomes in a state where the non-threaded shaft part 106 is inserted into the shaft insertion hole 110.

As described above, in the uniaxial eccentric screw pump 10 of this embodiment, since the flexible rod 62 can be connected with the rotor 30 by threadedly engaging the threaded shaft part 104 with the threaded groove 110a, a connecting operation and a disconnecting operation of both the shafts can be carried out very easily. When the flexible rod 62 is connected with the rotor 30 by the structural coupling part 100 described above, the flange part 102 of the flexible rod 62 becomes in a state where it facially contacts the end face 112 of the rotor 30. Thus, it is possible to receive a bending moment, which repeatedly acts in accordance with the eccentric rotation, at the facially contacting part of the seating surface 102a and the end face 112 by an elastic effect resulted from the tension in the screw. Therefore, by configuring the structural coupling part 100 as described above, it is possible to couple the rotor 30 to the flexible rod 62 without rattling therebetween, and it can certainly prevent inconveniences such as fretting wear, breakage of the rotor 30 and the flexible rod 62.

In addition, in the structural coupling part 100 described above, only by inserting the threaded shaft part 104 into the shaft insertion hole 110 to threadedly engage one another, the flexible rod 62 can be coupled to the rotor 30 to cause the seating surface 102a to facially contact the end face 112. Thus, by the shrink fit described as a conventional technology, while it has simplicity which is equivalent to the case where the flexible rod 62 is connected with the rotor 30, it also excels in attaching and removing and in mass production, as well as assembling and disassembling can easily be conducted (though it has a very simple configuration) compared with the case where they are coupled by other conventional structures. Therefore, the uniaxial eccentric screw pump 10 can minimize the manufacturing cost, the time and effort of maintenance, etc.

Further, in the structural coupling part 100, the clearance is formed between the tip end part of the flexible rod 62 and the bottom part 110b of the shaft insertion hole 110 formed in the rotor 30. Since it has such a configuration, it is possible to act the moment, which acts in the axial direction and the shaft rotational direction in accordance with the eccentric rotation, on the facially contacting part between the flange part 102 of the flexible rod 62 and the end face 112 of the rotor 30. Therefore, by configuring the structural coupling part 100 as described above, the rotor 30 can be connected with the flexible rod 62 so that the rattling is further prevented, and fretting wear and the like can be prevented.

In addition to the configuration described above, in the uniaxial eccentric screw pump 10 of this embodiment, the non-threaded shaft part 106 exists between the flange part 102 and the threaded shaft part 104 in the flexible rod 62. By this, it is possible to receive the moment associated with the eccentric rotation after distributing it into two locations of the facially contacting part between the flange part 102 of the flexible rod 62 and the end face 112 of the rotor 30, and a contact part P (refer to Fig. 3(c)) between a boundary part of the threaded shaft part 104 and the non-threaded shaft part 106, and the inner circumferential surface of the shaft insertion hole 110. Therefore, the fretting wear and breakage of the flexible rod 62 and the rotor 30 can be certainly prevented.

Note that, in this embodiment, although the structure where the moment is supported by providing the non-threaded shaft part 106 so as to be distributed into two locations of the facially contacting part between the flange part 102 and the end face 112, and the contact part P, is illustrated, the present invention is not limited to this, and it may have a configuration without the non-threaded shaft part 106 being provided. Even in the case of such a configuration, and it is also possible to sufficiently receive the moment associated with the eccentric rotation at the facially contacting part between the flange part 102 and the end face 112 and, thus, inconveniences such as the fretting wear will not be caused.

Further, the flange part 102 of the flexible rod 62 facially contacts the end face 112 of the rotor 30 in the structural coupling part 100. Further, since the seating surface 102a of the flange part 102 and the end face 112 are substantially smoothed by the surface finish, the seating surface 102a substantially close contacts the end face 112. Therefore, in the structural coupling part 100, it can certainly prevent the fluid from entering into the clearance between the threaded shaft part 104 and the threaded groove 110a and the like. Therefore, in the uniaxial eccentric screw pump 10, inconveniences such as corrosion of the rotor 30 and the flexible rod 62 associated with entering of fluid will not be caused.

In the structural coupling part 100, since rattling by the eccentric rotation will not be caused, wear debris resulted from the fretting wear of the rotor 30 and the flexible rod 62 will not be generated. In addition, the fluid will not enter between the flexible rod 62 and the rotor 30. Therefore, the uniaxial eccentric screw pump 10 can be suitably used for sanitary related applications, such as food application.

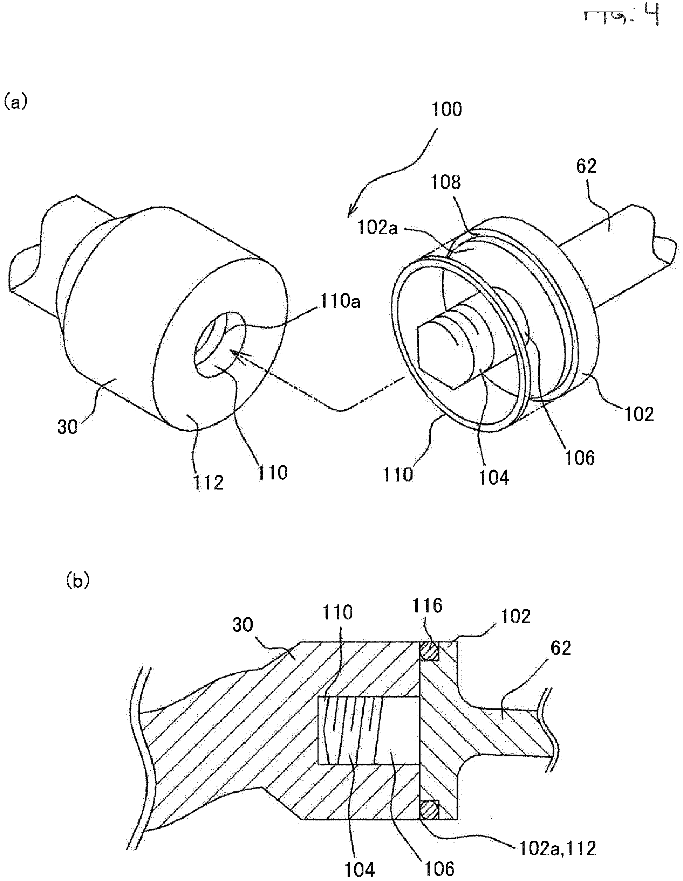

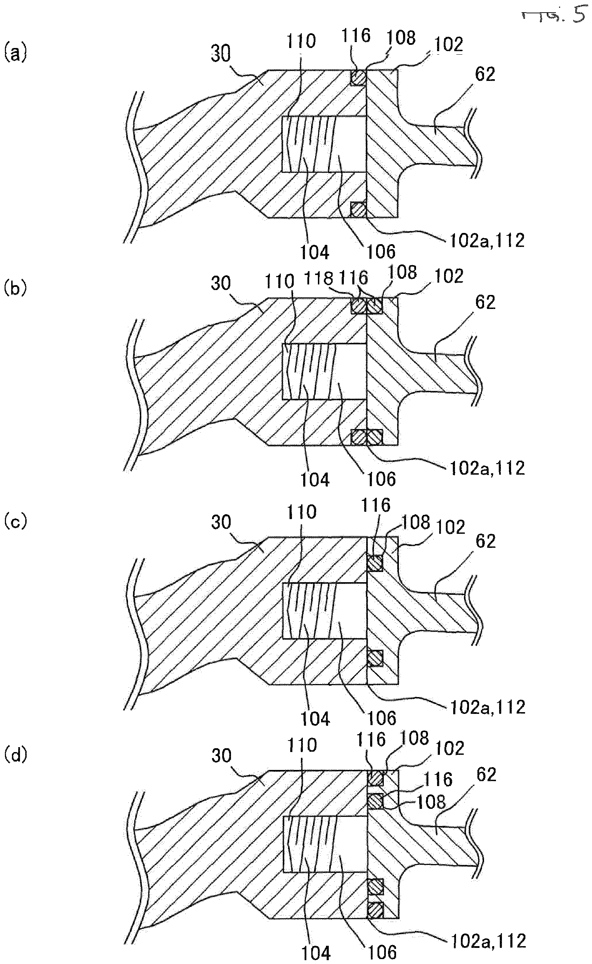

Note that, in order to prevent the fluid from entering into the part where the flange part 102 facially contacts the end face 112, it is also possible to have, in addition to the configuration described above, a configuration where sealing with a sealing member such as an O-ring is applied. Specifically, it may have a configuration in which, for example, as shown, in Fig. 4, a groove 108 is formed in a face of the flange part 102 on the threaded shaft part 104 side and the sealing member 116 such as an O-ring is fitted into the groove 108. Similarly, as shown in Fig. 5(a), it is possible to consider it as the structure in which the groove 108 is provided in the end face 112 side, and the sealing member 116 is fitted into the groove 108. In addition, it may have a configuration in which, as shown in Fig. 5(b), grooves 108 and 118 are formed so that they communicate with each other in a state where the flange part 102 facially contacts the end face 112 and the sealing member 116 is fitted into the grooves 108 and 118. Alternatively, as shown in Fig. 5(c), it may have a configuration in which the position at which the groove 108 is formed is located radially inward from the outer edge portion of the flange part 102, and the sealing member 116 is inserted into the groove 108. Alternatively, as shown in Fig. 5(d), it may have a configuration in which the groove 108 is formed both in the outer edge portion of the flange part 102 and at the position radially inward from the outer edge portion, respectively, and the sealing members 116 are inserted into both. By having such structures, it can prevent entering of fluid more securely.

Further, other than the sealing between the flange part 102 and the end face 112 by using the sealing member 116 or the like described above, sealing may also be possible by applying liquid gasket to the flange part 102 and the end face 112. By having such a configuration, it is possible to improve the fluid entering prevention effect between the flange part 102 and the end face 112.

Further, in the uniaxial eccentric screw pump 10, the threads formed in the threaded shaft part 104 of the flexible rod 62 and the threaded groove 110a of the rotor 30 are formed in the opposite direction from the primary rotational direction of the rotor 30. In other words, the threads formed in the threaded shaft part 104 and the threaded groove 110a are formed so that the thread engagement becomes tight as the rotor 30 and the flexible rod 62 rotate. Therefore, in the uniaxial eccentric screw pump 10, the coupling force in the structural coupling part 100 will not be reduced during operation. Further, in this embodiment, since the seating surface 102a of the flange part 102 and the end face 112 are made substantially smooth by the surface finish, a reduction in the coupling force of the structural coupling part 100 under the effects of torque which acts during the operation of the uniaxial eccentric screw pump 10 is difficult to occur. That is, in the uniaxial eccentric screw pump 10 of this embodiment, a fastening torque T1 at the time of forming the structural coupling part 100 is substantially the same as a removing torque T2 at the time of disassembling the structural coupling part 100 (T2≈T1).

Although in this embodiment the example where the threads formed in the threaded shaft part 104 of the flexible rod 62 and the threaded groove 110a of the rotor 30 are formed so that their threaded engagement becomes tight when the uniaxial eccentric screw pump 10 is in a normal operation is shown, the present invention is not limited to this. That is, the threads of the threaded shaft part 104 and the threaded groove 110a may be formed in a direction so that their threaded engagement becomes loose, i.e., may be formed in the same direction as the rotation of the rotor 30. Note that, when the threads are formed so that their threaded engagement becomes loose as described above, it is preferred to add a configuration for loosening prevention so that the fastening force in the structural coupling part 100 will not be reduced.

Further, although in this embodiment the example where both the seating surface 102a of the flange part 102 and the end face 112 are made substantially smooth by the surface finish is shown in terms of, for example, retention of the fastening force, prevention of the inconveniences due to a formation of the clearance between the seating surface 102a and the end face 112 in the structural coupling part 100, the present invention is not limited to this. That is, the surface finish may be applied to either one of the seating surface 102a or the end face 112 so that the surface state becomes smooth. Further, if the size of the clearance produced in the structural coupling part 100 in the case where the seating surface 102a and the end face 112 are not made smooth, or the reduction amount of the fastening force in the structural coupling part 100 is assumed not to be influential for operation, the surface finish may not be applied to either one of the seating surface 102a or the end face 112, or may not be applied to any of these. Further, in the structural coupling part 100, a sealing member, such as a rubber sheet, capable of sealing may intervene between the end face 112 of the rotor 30 and the seating surface 102a of the flexible rod 62. By having such a configuration, it is possible to prevent that the end face 112 and the seating surface 102a bite the fluid therebetween.

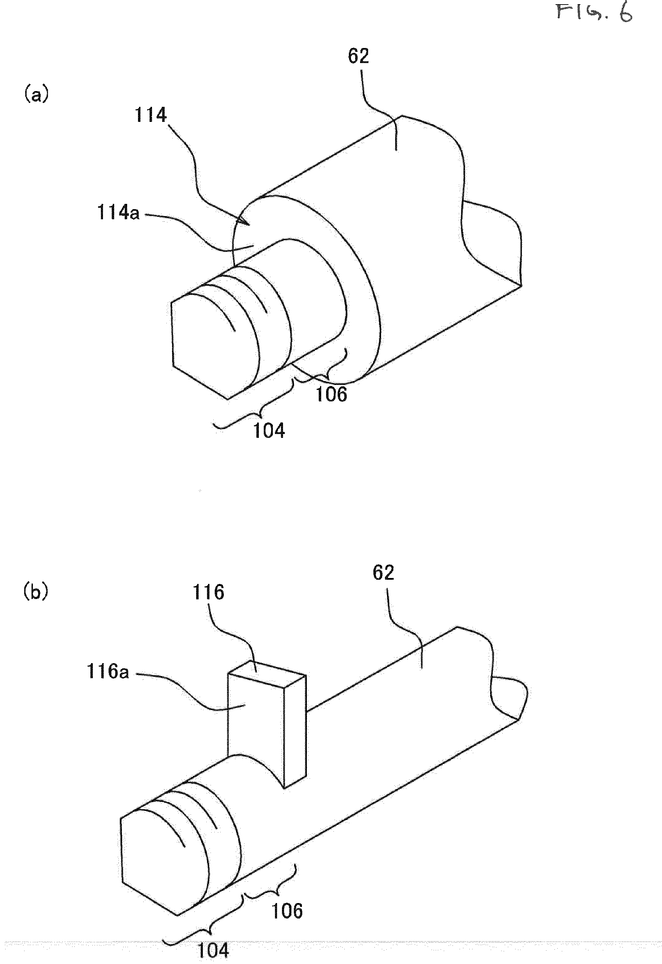

Although in this embodiment the configuration in which the disk-shaped flange part 102 is provided on the tip end side of the flexible rod 62 so that it is coaxial with the flexible rod 62, and the seating surface 102a of the flange part 102 facially contacts the end face 112 of the rotor 30 is illustrated, the present invention is not limited to this. Specifically, as shown in Fig. 6(a), it is possible to have a configuration in which the tip end side of the flexible rod 62 is reduced in diameter to form the threaded shaft part 104 and the non-threaded shaft part 106. If having such a configuration, by inserting the threaded shaft part 104 into the shaft insertion hole 110 of the rotor 30 to threadedly engaging them, a surface which forms a stepped portion 114 formed in the boundary between the main body of the flexible rod 62 and the part where the threaded shaft part 104 and the non-threaded shaft part 106 are formed serves as a seating surface 114a, and it facially contacts the end face 112 of the rotor 30. By this, the seating surface 114a exhibits functions similar to the seating surface 102a of the flange part 102 described above and, thus, operations and effects similar to the case where the flange part 102 is provided can be obtained.

Further, instead of providing the flange part 102 radially projected from the entire periphery of the flexible rod 62 described above, a seating surface 116a may be formed by forming a protrusion 116 projected radially outward in a partial area of the flexible rod 62 in the circumferential direction as shown in Fig. 6(b). By having such a configuration, the seating surface 116a may facially contact the end face 112 of the rotor 30. By this, the seating surface 116a exhibits functions similar to the seating surface 102a of the flange part 102 described above, and operations and effects similar to the case where the flange part 102 is provided can be obtained.

Although in this embodiment the configuration in which the flange part 102, the threaded shaft part 104, and the non-threaded shaft part 106 are provided on the flexible rod 62 side, and the shaft insertion hole 110 having the threaded groove 110a and the end face 112 which can facially contact the flange part 102 are formed on the rotor 30 side is illustrated, the configuration of the both may be reversed. Specifically, it may have a configuration in which the flange part 102, the threaded shaft part 104, and the non-threaded shaft part 106 is provided on the rotor 30 side, and the shaft insertion hole 110 and the end face 112 are formed on the flexible rod 62 side. Even if it has such a configuration, operations and effects similar to the structural coupling part 100 shown in this embodiment can be obtained.

Although in this embodiment the structure in which one end side of the flexible rod 62 is coupled to the rotor 30 via the structural coupling part 100, and the other end side of the flexible rod 62 is coupled to the drive shaft 56 by the universal joint 80 is illustrated, the present invention is not limited to this. Specifically, it may have a structure in which the flexible rod 62 is coupled to the drive shaft 56 by the structural coupling part 100 instead of the universal joint 80. That is, the drive shaft 56 may serve as a coupling shaft with which the flexible rod 62 is connected. Further, instead of forming the structural coupling part 100 in the connecting part of the flexible rod 62 and the rotor 30 as described above, the structural coupling part 100 may be formed in a connecting part of the flexible rod 62 and the drive shaft 56. That is, the uniaxial eccentric screw pump 10 may have either one of the configuration in which the structural coupling part 100 is formed only in one end side of the flexible rod 62, or a configuration in which the structural coupling part 100 is formed in both ends of the flexible rod 62.

Although in this embodiment the configuration in which the rotor 30 is directly coupled to the flexible rod 62 is illustrated, the present invention is not limited to this, and it may have a structure in which a shaft body (hereinafter, also referred to as "the intermediate shaft") is additionally provided between the rotor 30 and the flexible rod 62, and the flexible rod 62 is connected via the intermediate shaft. In this case, an element corresponding to the structural coupling part 100 described above is formed by forming in the intermediate shaft an element corresponding to the shaft insertion hole 110 formed in the end face 112 of the rotor 30, and similar operations and effects can be obtained. Further, similar operations and effects can also be obtained by forming an element corresponding to the structural coupling part 100 for the connecting part between the intermediate shaft and the rotor 30. Similarly, as for the connecting part between the flexible rod 62 and the drive shaft 56, the intermediate shaft may also be provided between the both. In this case, operations and effects similar to what is described in this embodiment can be obtained by providing an element corresponding to the structural coupling part 100 in either one or both of the connecting part between the intermediate shaft and the flexible rod 62, and the intermediate shaft and the drive shaft 56.

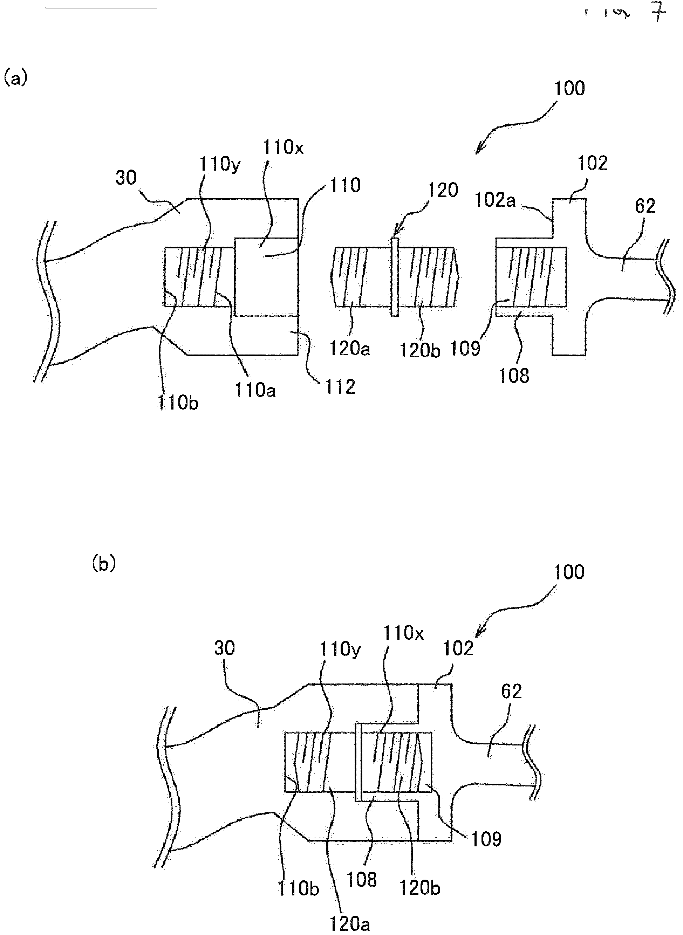

Further, in this embodiment, although the threaded shaft part 104 is integrally formed with the flange part 102 is illustrated in the tip end part of the flexible rod 62, the present invention is not limited to this. Specifically, for example, as shown in Fig. 7, it may have a structure in which an element (a threaded shaft 120) which forms the threaded shaft part 104 described above is provided, and the flexible rod 62 is coupled to the rotor 30 via the threaded shaft 120.

Describing in more detail regarding this modification, in this modification, as shown in Fig. 7(a), the threaded shaft 120 where male threads 120a and 120b are formed at both ends thereof is provided as a member which can be attached and removed to/from the flexible rod 62. In addition, in this modification, a protrusion 108 is provided at substantially the center of the flange part 102 provided to the tip end side of the flexible rod 62, and a threaded hole 109 comprised of a female thread with which the threaded shaft 120 is threadedly engageable is formed in the protrusion 108. When the threaded shaft 120 is mounted to the threaded hole 109 by threaded engagement, an element corresponding to the flexible rod 62 described above is formed. That is, the male thread 120a of the threaded shaft 120 corresponds to the threaded shaft part 104, and the protrusion 108 corresponds to the non-threaded shaft part 106.

In addition, in this modification, as shown in Fig. 7(a), the shape and the structure of the flexible rod 62 are changed by forming the part corresponding to the threaded shaft part 104 and the non-threaded shaft part 106 from the threaded shaft 120 and the protrusion 108, respectively. Accordingly, the shape and the structure of the shaft insertion hole 110 formed in the rotor 30 side are partially changed as well. Specifically, a hole (protrusion accommodating part 110x) having the size to accommodate the protrusion 108 is formed in an inlet part of the shaft insertion hole 110, and a threaded hole 110y comprised of a female thread with which the threaded shaft 120 threadedly engage is formed in a deeper side of the protrusion accommodating part 110x.

When it has the configuration described above, by mounting the threaded shaft 120 to the threaded hole 109 formed in the protrusion 108, and inserting and threadedly engaging the threaded shaft 120 and the protrusion 108 which are connected with the tip end part of the flexible rod 62 into/with the shaft insertion hole 110 of the rotor 30, the rotor 30 can be coupled to the flexible rod 62 (refer to Fig. 7(b)). Further, as for the case where the both 30 and 62 are coupled to each other, operations and effects similar to the case where the structure described in the above embodiment is adopted can be also obtained.

Note that although the configuration in which the male threads 120a and 120b are formed in the threaded shaft 120 described above and the threaded holes 109 and 110y comprised of female threads are formed is illustrated, the relations between the male threads and the female threads may be reversed. Alternatively, although the configuration in which the protrusion 108 is formed in the substantially central part of the flange part 102 and the protrusion 108 has the function corresponding to the non-threaded shaft part 106 is illustrated, it may have a configuration in which the part corresponding to the protrusion 108 is not provided. When it has such a configuration, the threaded shaft 120 can be coupled to the flange part 102 by forming the seating surface 102 of the flange part 102 flat, and forming a threaded hole with which the screw male thread 120b is threadedly engageable is formed in the substantially central part. When not provided with the protrusion 108, a part where no thread is formed may be formed between the male threads 120a and 102b of the threaded shaft 120, and this part may be used as an element corresponding to the non-threaded shaft part 106.

### [EXAMPLE]

Next, experimental results of the relations between the fastening torque T1 and the removing torque T2 in the structural coupling part 100 formed between the flexible rod 62 and the rotor 30 in the uniaxial eccentric screw pump 10 described above is described. In the uniaxial eccentric screw pump 10 described above, an experiment was conducted to examine the relations of diameters M, the fastening torque T1, the removing torque T2, and the eccentricity of the rotor 30 of the thread formed in the threaded shaft part 104 of the flexible rod 62 and the thread of the threaded groove 110a formed in the shaft insertion hole 110 of the rotor 30. The operational duration of the uniaxial eccentric screw pump 10 in this experiment was one month to three months, and a rotational speed was 300 [min-1]. The material of the flexible rod 62 was SUS630 or a titanium alloy (Ti-6A1-4V). The material of the drive shaft and the rotor 30 was SUS316. In this experiment, the flexible rod 62 was coupled to the rotor 30 by using a variable torque wrench, and torque setting at the time of coupling is used as the fastening torque T1. In addition, when disassembling the structural coupling part 100, the torque setting of the variable torque wrench was gradually increased, and the setting value when the loosening was caused in the structural coupling part 100 was used as the removing torque T2. The experimental results are shown in the following table 1.

**[Table 1]**

| Thread Diameter M | Fastening Torque T1 [Nm] | Removing Torque T2 [Nm] | Rotor Eccentricity [Nm] |
|---|---|---|---|
| M12 | 54 | 44 to 54 | 3 to 4 |
| M16 | 136 | 110 to 135 | 6 to 8 |
| M20 | 270 | 230 to 260 | 8 to 10 |

As shown in the above table 1, the removing torque T2 was substantially the same as the fastening torque T1 even when the fastening torque T1 and the removing torque T2 were measured under any of the conditions. Thus, it was found that the flexible rod 62 can be coupled to the rotor 30 by coupling them in the state where the seating surface 102a facially contacts the end face 112, so that the coupling is tight and will not be loosened.

### [Reference Signs List]

- 10: Uniaxial Eccentric Screw Pump
- 20: Stator
- 30: Rotor (Coupling Shaft, Passive Shaft Body)
- 50: Power Transmission Mechanism
- 62: Flexible Rod
- 100: Structural Coupling Part
- 102: Flange Part
- 102a: Seating Surface (Contact Surface)
- 104: Threaded Shaft Part
- 104a: Male Thread
- 106: Non-threaded Shaft Part
- 110: Shaft Insertion Hole
- 110a: Threaded Groove
- 110b: Bottom Surface
- 112: End Face

## Claims

1. A uniaxial eccentric screw pump (10), comprising:
a drive operable to generate rotational power;
a power transmission mechanism part (50) operable to transmit the rotational power inputted from the drive;
a rotor (30) comprised of a male threaded shaft body; and
a stator (20) into which the rotor (30) is insertable, an inner circumferential surface (24) thereof being formed in a female thread,
wherein the power transmission mechanism part (50) comprises:
a driving side shaft body (56) operable to be rotated with the rotational power generated in the drive; and
a flexible rod (62), connecting the driving side shaft body (56) with a non-coaxial passive side shaft body (30) that constitutes the rotor (30), and having flexibility,
wherein the rotor (30) is operable to eccentrically rotate so that the rotor (30) rotates inside the stator (20) and revolves along an inner circumferential surface of the stator (20),
wherein either:
the driving side shaft body (56) and the passive side shaft body (30) are used as a coupling shaft, and two structural coupling parts are formed by connecting the flexible rod (62) with the driving side shaft body (56) at one end of the flexible rod (62) and the passive side shaft body (30) at the other end of the flexible rod (62),
or
the driving side shaft body (56) or the passive side shaft body (30) is used as a coupling shaft, and a structural coupling part is formed by connecting the flexible rod (62) with the coupling shaft at one end of the flexible rod (62), wherein
the structural coupling part (100) comprises:
a flange part (102) being at one end of the flexible rod (62);
a seating surface (102a) being at the flange part (102); and
an end face (112) being at one end of the coupling shaft,
wherein one of the flexible rod (62) and the coupling shaft is defined to be a shaft A and the other is defined to be a shaft B,
a threaded shaft part (104) is formed in a tip end part of the shaft A,
a shaft insertion hole (110) is formed in the tip end part of the shaft B, the threaded shaft part (104) being insertable into the shaft insertion hole (110), and a threaded groove (110a) with which the threaded shaft part (104) is threadedly engageable being formed in an inner circumferential surface of the shaft insertion hole (110), and
in the structural coupling part, the threaded shaft part (104) formed in the shaft A is inserted into the shaft insertion hole (110) formed in the shaft B, the threaded shaft part (104) threadedly engages with the threaded groove (110a), and the shaft A is coupled to the shaft B in a state where the shaft A facially contacts with the shaft B by facially contacting the seating surface (102a) with the end face (112),
a clearance is formed between the tip end part of the shaft A and a bottom part of the shaft insertion hole (110) formed in the shaft B and
a non-threaded shaft part (106) exists in the shaft A, between the flange part (102) and the threaded shaft part (104), and wherein, in the structural coupling part, the non-threaded shaft part (106) is inserted into the shaft insertion hole (110), **characterised in that**
a contact part (P) is formed between a boundary part of the threaded shaft part (104) and the non-threaded shaft part (106), and the inner circumferential surface of the shaft insertion hole (110).

2. The uniaxial eccentric screw pump (10) of claim 1, wherein
the rotor (30) is operable to eccentrically rotate by being driven with the rotational power transmitted via the power transmission mechanism part (50); and
wherein the flexible rod (62) is provided to the power transmission mechanism part (50), and the flexible rod (62) connects between the driving side shaft body (56) and the passive side shaft body (30) constituting the rotor (30),
a flange part (102) projecting radially outward and the threaded shaft part (104) formed on the tip end side of the shaft A with respect to the flange part (102) are provided to the shaft A,
the shaft insertion hole (110) is formed so as to open in an end face of the shaft B, and
wherein the flange part (102) of the shaft A facially contacts with the end face of the shaft B to couple the shaft A to the shaft B.

3. The uniaxial eccentric screw pump (10) of claim 2, wherein the shaft A is dividable into the threaded shaft part (104) and a flange part (102).

4. The uniaxial eccentric screw pump (10) of claim 2 or 3, wherein the shaft A has a contact surface operable to facially contact with an end face of the shaft B, and
wherein the contact surface of the shaft A and/or the end face of the shaft B are formed smoothly.

5. The uniaxial eccentric screw pump (10) of any one of claims 2 to 4, wherein the shaft A has a contact surface operable to facially contact with an end face of the shaft B,
wherein a groove is formed in the contact surface of the shaft A and/or the end face of the shaft B, and
wherein a sealing member (116) is fitted into the groove.

6. The uniaxial eccentric screw pump (10) of any one of claims 1 to 5, wherein the coupling shaft rotates mainly in a predetermined rotational direction, and
wherein a thread (104a) is formed in the threaded shaft part (104) in the opposite direction from the rotational direction of the coupling shaft.

## Patentansprüche

1. Einachsige Exzenterschraubenpumpe (10), umfassend:
einen Antrieb, der dazu betrieben werden kann, Drehkraft zu erzeugen;
ein Kraftübertragungsmechanismusteil (50), das dazu betrieben werden kann, die von dem Antrieb eingebrachte Drehkraft zu übertragen;
einen Rotor (30), der aus einem Wellenkörper mit Außengewinde besteht; und
einen Stator (20), in den der Rotor (30) eingesetzt werden kann, wobei eine Umfangsfläche (24) davon in einem Innengewinde gebildet ist,
wobei der Kraftübertragungsmechanismusteil (50) Folgendes umfasst:
einen Antriebsseitenwellenkörper (56), der dazu betrieben werden kann, mit der in dem Antrieb erzeugten Drehkraft gedreht zu werden; und
eine flexible Stange (62), die den Antriebsseitenwellenkörper (56) mit einem nichtkoaxialen Passivseitenwellenkörper (30), der den Rotor (30) darstellt, verbindet und Flexibilität aufweist,
wobei der Rotor (30) dazu betrieben werden kann, sich exzentrisch zu drehen, sodass sich der Rotor (30) innerhalb des Stators (20) dreht und entlang eines inneren Umfangsfläche des Stators (20) rotiert,
wobei entweder:
der Antriebsseitenwellenkörper (56) und der Passivseitenwellenkörper (30) als eine Kopplungswelle verwendet ist und zwei strukturelle Kopplungsteile durch Verbinden der flexiblen Stange (62) mit dem Antriebsseitenwellenkörper (56) an einem Ende der flexiblen Stange (62) und dem Passivseitenwellenkörper (30) an dem anderen Ende der flexiblen Stange (62) gebildet werden,
oder
der Antriebsseitenwellenkörper (56) oder der Passivseitenwellenkörper (30) als eine Kopplungswelle verwendet ist und ein strukturelles Kopplungsteil durch Verbinden der flexiblen Stange (62) mit der Kopplungswelle an einem Ende der flexiblen Stange (62) gebildet ist,
wobei
das strukturelle Kopplungsteil (100) Folgendes umfasst:
ein Flanschteil (102), das sich an einem Ende der flexiblen Stange (62) befindet;
eine Sitzfläche (102a), die sich an dem Flanschteil (102) befindet; und
eine Stirnseite (112), die sich an einem Ende der Kopplungswelle befindet, wobei eine von der flexiblen Stange (62) und der Kopplungswelle als Welle A definiert ist und die andere als Welle B definiert ist,
ein Wellenteil mit Gewinde (104) in einem Spitzenendteil der Welle A gebildet ist,
ein Welleneinführungsloch (110) in dem Spitzenendteil der Welle B gebildet ist, wobei das Wellenteil mit Gewinde (104) in das Welleneinführungsloch (110) eingeführt werden kann, und eine Nut mit Gewinde (110a), die mit dem Wellenteil mit Gewinde (104) per Gewinde eingreifen kann, in einer inneren Umfangsfläche des Welleneinführungslochs (110) gebildet ist, und
in dem strukturellen Kopplungsteil das in der Welle A gebildete Wellenteil mit Gewinde (104) in das in der Welle B gebildete Welleneinführungsloch (110) eingeführt ist, das Wellenteil mit Gewinde (104) per Gewinde in die Nut mit Gewinde (110a) eingreift und die Welle A mit der Welle B in einem Zustand gekoppelt ist, in dem die Welle A mit der Vorderseite die Welle B berührt, indem die Sitzfläche (102a) mit der Vorderseite die Stirnseite (112) berührt,
ein Abstand zwischen dem Spitzenendteil der Welle A und einem Bodenteil des in der Welle B gebildeten Welleneinführungslochs (110) gebildet ist und
ein Wellenteil ohne Gewinde (106) in der Welle A zwischen dem Flanschteil (102) und dem Wellenteil mit Gewinde (104) vorhanden ist und wobei in dem strukturellen Kopplungsteil das Wellenteil ohne Gewinde (106) in das Welleneinführungsloch (110) eingeführt ist, **dadurch gekennzeichnet, dass**
ein Kontaktteil (P) zwischen einem Grenzteil des Wellenteils mit Gewinde (104) und dem Wellenteil ohne Gewinde (106) und der inneren Umfangsfläche des Welleneinführungslochs (110) gebildet ist.

2. Einachsige Exzenterschraubenpumpe (10) nach Anspruch 1, wobei
der Rotor (30) dazu betrieben werden kann, sich exzentrisch zu drehen, indem der mit der Drehkraft angetrieben wird, die über das Kraftübertragungsmechanismusteil (50) übertragen wird; und
wobei die flexible Stange (62) für das Kraftübertragungsmechanismusteil (50) bereitgestellt ist und die flexible Stange (62) eine Verbindung zwischen dem Antriebsseitenwellenkörper (56) und dem Passivseitenwellenkörper (30), der den Rotor (30) darstellt, herstellt,
ein Flanschteil (102), das radial nach außen hervorsteht, und das Wellenteil mit Gewinde (104), das an der Spitzenendseite der Welle A in Bezug auf das Flanschteil (102) gebildet ist, für die Welle A bereitgestellt sind,
das Welleneinführungsloch (110) so gebildet ist, dass es sich in einer Stirnseite der Welle B öffnet, und
wobei das Flanschteil (102) der Welle A mit der Vorderseite die Stirnseite der Welle B berührt, um die Welle A mit der Welle B zu koppeln.

3. Einachsige Exzenterschraubenpumpe (10) nach Anspruch 2, wobei die Welle A in das Wellenteil mit Gewinde (104) und eine Flanschteil (102) getrennt werden kann.

4. Einachsige Exzenterschraubenpumpe (10) nach Anspruch 2 oder 3, wobei die Welle A eine Berührungsfläche aufweist, die dazu betrieben werden kann, mit der Vorderseite eine Stirnseite der Welle B zu berühren, und
wobei die Kontaktfläche der Welle A und/oder die Stirnseite der Welle B glatt gebildet sind.

5. Einachsige Exzenterschraubenpumpe (10) nach einem der Ansprüche 2 bis 4, wobei die Welle A eine Berührungsfläche aufweist, die dazu betrieben werden kann, Vorderseittig mit eine Stirnseite der Welle B zu berühren,
wobei eine Nut in der Kontaktfläche der Welle A und/oder die Stirnseite der Welle B gebildet ist, und
wobei ein Abdichtelement (116) in die Nut eingesetzt ist.

6. Einachsige Exzenterschraubenpumpe (10) nach einem der Ansprüche 1 bis 5, wobei sich die Kopplungswelle hauptsächlich in einer vorbestimmten Drehrichtung dreht, und
wobei ein Gewinde (104a) in dem Wellenteil mit Gewinde (104) in der entgegengesetzten Richtung zu der Drehrichtung der Kopplungswelle gebildet ist.

## Revendications

1. Pompe à vis excentrique uniaxiale (10), comprenant :
un dispositif d'entraînement servant à générer une puissance de rotation ;
une partie de mécanisme de transmission de puissance (50) servant à transmettre la puissance de rotation fournie par le dispositif d'entraînement ;
un rotor (30) comprenant un corps d'arbre fileté mâle ; et
un stator (20) dans lequel le rotor (30) peut être inséré, sa surface circonférentielle interne (24) étant formée dans un filet femelle
ladite partie de mécanisme de transmission de puissance (50) comprenant :
un corps d'arbre latéral d'entraînement (56) pouvant être mis en rotation à l'aide de la puissance de rotation générée par le dispositif d'entraînement ; et
une tige flexible (62), reliant le corps d'arbre de côté d'entraînement (56) à un corps d'arbre de côté passif non coaxial (30) qui constitue le rotor (30), et présentant une flexibilité,
ledit rotor (30) pouvant être actionné pour tourner de manière excentrique de sorte que le rotor (30) tourne à l'intérieur du stator (20) et suive une rotation le long d'une surface circonférentielle interne du stator (20),
soit :
ledit corps d'arbre de côté d'entraînement (56) et ledit corps d'arbre de côté passif (30) sont utilisés comme une arbre d'accouplement, et deux parties d'accouplement structurelles étant formées en reliant la tige flexible (62) au corps d'arbre latéral entraînement (56) au niveau d'une extrémité de la tige flexible (62) et au corps d'arbre de côté passif (30) au niveau de l'autre extrémité de la tige flexible (62),
soit
ledit corps d'arbre de côté d'entraînement (56) ou ledit corps d'arbre de côté passif (30) est utilisé comme une arbre d'accouplement, et une partie d'accouplement structurelle étant formée en reliant la tige flexible (62) à l'arbre d'accouplement au niveau d'une extrémité de la tige flexible (62),
ladite partie d'accouplement
structurelle (100) comprenant:
une partie bride (102) se trouvant au niveau d'une extrémité de la tige flexible (62) ;
une surface d'assise (102a) se trouvant au niveau de la partie bride (102) ; et
une face d'extrémité (112) se trouvant au niveau d'une extrémité de l'arbre d'accouplement,
l'un de la tige flexible (62) et de l'arbre d'accouplement étant défini á être un arbre A et l'autre étant défini á être un arbre B,
une partie d'arbre filetée (104) étant formée dans une partie d'extrémité de pointe de l'arbre A,
un trou d'insertion (110) d'arbre étant formé dans la partie d'extrémité de pointe de l'arbre B, la partie d'arbre filetée (104) pouvant être insérée dans le trou d'insertion (110) d'arbre, et une rainure filetée (110a) avec laquelle la partie d'arbre filetée (104) peut être en prise par filetage, étant formée dans une surface circonférentielle interne du trou d'insertion (110) d'arbre, et
dans la partie d'accouplement structurelle, la partie d'arbre filetée (104) formée dans l'arbre A étant insérée dans le trou d'insertion (110) d'arbre formé dans l'arbre B, ladite partie d'arbre filetée (104) venant en prise par filetage avec la rainure filetée (110a) et ledit arbre A étant couplé à l'arbre B dans un état où l'arbre A entre en contact face à face avec l'arbre B en mettant en contact face à face la surface d'assise (102a) avec la face d'extrémité (112),
un jeu étant formé entre la partie d'extrémité de pointe de l'arbre A et une partie inférieure du trou d'insertion (110) d'arbre formé dans l'arbre B et
une partie d'arbre non filetée (106) existant dans l'arbre A, entre la partie bride (102) et la partie d'arbre filetée (104), et dans la partie d'accouplement structurelle, ladite partie d'arbre non filetée (106) étant insérée dans le trou d'insertion (110) d'arbre, **caractérisé en ce que**
une partie de contact (P) est formée entre une partie frontière de la partie d'arbre filetée (104) et de la partie d'arbre non filetée (106), et la surface circonférentielle interne du trou d'insertion (110) d'arbre.

2. Pompe à vis excentrique uniaxiale (10) selon la revendication 1,
ledit rotor (30) pouvant être actionnée pour tourner de manière excentrique en étant entraîné par la puissance de rotation transmise par l'intermédiaire de la partie de mécanisme de transmission de puissance (50) ; et
ladite tige flexible (62) étant fournie à la partie de mécanisme de transmission de puissance (50), et ladite tige flexible (62) se raccordant entre le corps d'arbre de côté d'entraînement (56) et le corps d'arbre de côté passif (30) constituant le rotor (30),
une partie bride (102) faisant saillie radialement vers l'extérieur et ladite partie d'arbre filetée (104) formée sur le côté d'extrémité de pointe de l'arbre A par rapport à la partie bride (102) étant fournies à l'arbre A,
ledit trou d'insertion (110) d'arbre étant formé de façon à s'ouvrir dans une face d'extrémité de l'arbre B, et
ladite partie bride (102) de l'arbre A étant en contact face à face avec la face d'extrémité de l'arbre B pour coupler l'arbre A à l'arbre B.

3. Pompe à vis excentrique uniaxiale (10) selon la revendication 2, ledit arbre A pouvant être divisé en la partie d'arbre filetée (104) et une partie bride (102).

4. Pompe à vis excentrique uniaxiale (10) selon la revendication 2 ou 3, ledit arbre A possédant une surface de contact pouvant être actionnée pour entrer en contact face à face avec une face d'extrémité de l'arbre B, et
ladite surface de contact de l'arbre A et/ou ladite face d'extrémité de l'arbre B étant formées lisses.

5. Pompe à vis excentrique uniaxiale (10) selon l'une quelconque des revendications 2 à 4, ledit arbre A possédant une surface de contact pouvant être actionnée pour entrer en contact face à face avec une face d'extrémité de l'arbre B,
une rainure étant formée dans la surface de contact de l'arbre A et/ou la face d'extrémité de l'arbre B, et
un élément d'étanchéité (116) étant serrée dans la rainure.

6. Pompe à vis excentrique uniaxiale (10) selon l'une quelconque des revendications 1 à 5, ledit arbre d'accouplement tournant principalement dans un sens de rotation prédéterminée, et
un filetage (104a) étant formé dans la partie d'arbre filetée (104) dans la direction opposée à la direction de rotation de l'arbre d'accouplement.
